# FASCICULE DE BREVET EUROPEEN

(11) **EP 0 978 915 B1**
(45) Date de publication et mention de la délivrance du brevet: **18.08.2004**
(21) Numéro de dépôt: 99401953.7
(22) Date de dépôt: 30.07.1999
(51) Int. Cl.: H02G 3/04

(54) **Chemin de cable**
Kabelrinne
Cableway

(30) Priorité: 03.08.1998 FR 9809921
(43) Date de publication de la demande: 09.02.2000
(73) Titulaire: Société de Constructions Electriques de la Seine ( CES), 92130 Issy-les-Moulineaux (FR)
(72) Inventeur: Dufourg, Bernard, 75006 Paris (FR)
(74) Mandataire: Burbaud, Eric

(56) Documents cités:
- EP-A- 0 813 012
- FR-A- 1 375 765

## Description

La présente invention est relative aux chemins de câbles.

Plus particulièrement, l'invention concerne un chemin de câble comprenant un profilé ayant au moins une paroi dans laquelle sont ménagées des découpes en forme de U qui délimitent chacune une languette.

Le document EP-A-0 813 012 décrit un exemple d'un tel chemin de câble, dans lequel les languettes servent à attacher des colliers de fixation de câbles.

Les chemins de câbles connus de ce type présentent l'inconvénient de nécessiter des dispositions spéciales aux endroits où des câbles sortent du chemin de câble, ce qui augmente le coût et la complexité de mise en oeuvre de ces chemins de câbles.

La présente invention a notamment pour but de pallier cet inconvenient.

A cet effet, selon l'invention, un chemin de câble du genre en question est essentiellement caractérisé en ce qu'au moins une desdites languettes est repliée sur elle-même de façon à dégager un évidement de passage de câble dans la paroi du chemin de câble.

Grâce à ces dispositions, on évite tout aménagement spécial coûteux ou complexe pour permettre les entrées et sorties de câbles dans le chemin de câble. De plus, l'opération qui consiste à replier une languette sur elle-même pour dégager un évidement de passage de câble est simple et rapide à réaliser par le poseur du chemin de câble. Enfin, lorsque les découpes en forme de U sont ménagées à intervalles assez courts le long du chemin de câble, l'invention permet de choisir exactement l'emplacement optimum pour réaliser un évidement de passage de câble.

Dans des modes de réalisation préférés de l'invention, on peut éventuellement avoir recours en outre à l'une et/ou à l'autre des dispositions suivantes
- le profilé présente une section en U comportant un fond et deux ailes ;
- les découpes en forme de U sont ménagées au moins dans le fond du profilé ;
- les découpes en forme de U sont ménagées à intervalles réguliers le long dudit chemin de câble ;
- la languette qui est repliée sur elle-même pour dégager un évidement de passage de câble, est repliée vers l'extérieur du chemin de câble ;
- la languette qui est repliée sur elle-même pour dégager un évidement de passage de câble, est repliée sensiblement à 180 degrés ;
- le chemin de câble supporte au moins un câble qui traverse ledit évidement de passage de câble ;
- l'évidement de passage de câble présente une largeur au moins égale à 1 cm et une longueur au moins égale à 2 cm ;
- le profilé est métallique.

D'autres avantages de l'invention apparaîtront au cours de la description suivante d'une de ses formes de réalisation, donnée à titre d'exemple non limitatif, en regard des dessins joints.

Sur les dessins :
- la figure 1 est une vue en perspective d'un chemin de câble selon une forme de réalisation de l'invention,
- et la figure 2 est une vue de détail en coupe du chemin de câble de la figure 1.

Sur les différentes figures, les mêmes références désignent des éléments identiques ou similaires.

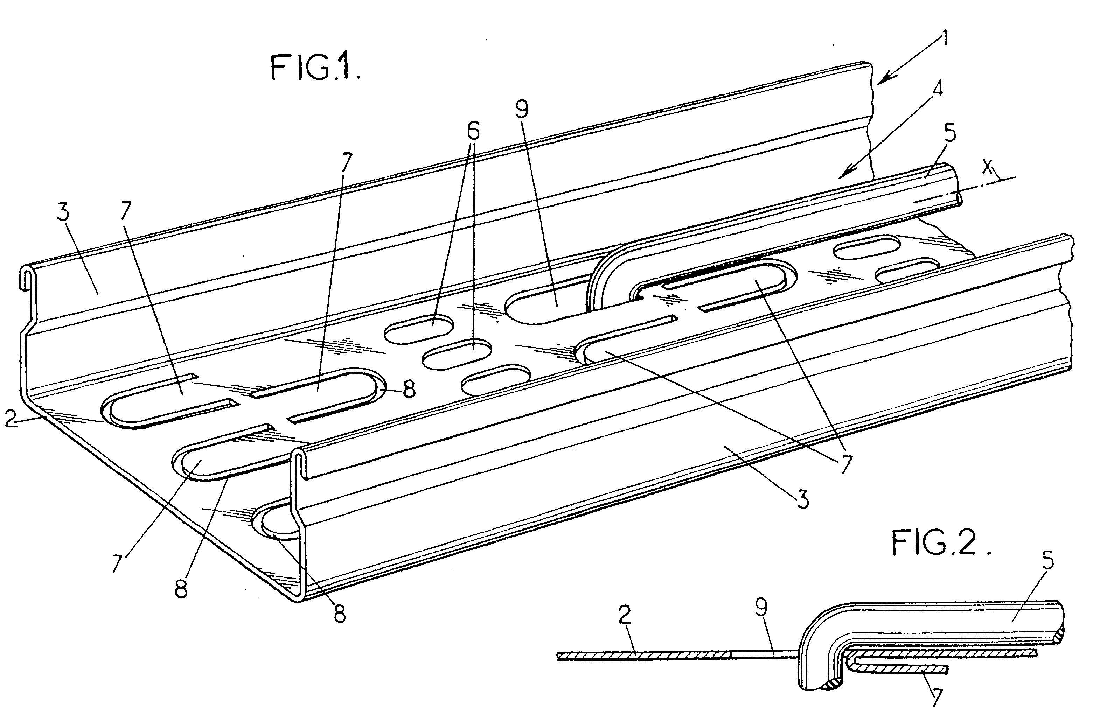

La figure 1 représente d'un chemin de câble 1 qui se présente sous la forme d'un profilé métallique à section en U, comprenant un fond 2 et deux ailes latérales 3 qui peuvent le cas échéant être recouvertes par un couvercle (non représenté). Le profilé 1 délimite un espace intérieur 4 destiné à recevoir un ou plusieurs câble 5 qui s'étendent chacun dans la direction longitudinale X du chemin de câble.

Le câble 5 est fixé dans le chemin de câble 1, généralement au moyen de colliers de serrage souples (non représentés) qui sont engagés dans des lumières oblongues 6 et/ou sur des languettes 7 délimitées par des fentes 8 en forme de U ménagées au moins dans le fond 2 du chemin de câble, comme expliqué dans le document EP-A-0 813 012 susmentionné.

Les languettes 7 s'étendent de préférence dans la direction X, et les fentes en U qui délimitent ces languettes sont de préférence ménagées à intervalles réguliers et rapprochés le long du chemin de câble (la distance entre deux languettes 7 successives, mesurée parallèlement à la direction X, est par exemple au plus égale à 3 cm).

Selon l'invention, on utilise au moins une des languettes 7 pour ménager un évidement 9 de passage de câble dans le fond 2 du chemin de câble, en repliant ladite languette sur elle-même. La languette 7 est de préférence repliée vers l'extérieur du chemin de câble, avantageusement sensiblement à 180 degrés, comme représenté sur la figure 2.

Ainsi, le câble 5 peut sortir de l'espace intérieur 4 du chemin de câble pour rejoindre une installation électrique ou un autre chemin de câble, en traversant l'évidement 9 de passage de câble.

Eventuellement, le câble 5 peut être fixé au chemin de câble 1 uniquement par les lumières oblongues 6, ou par tout autre moyen, de sorte que les languettes 7 et les fentes en U 8 peuvent avoir des formes quelconques pourvu que l'évidement 9 ait une taille suffisante pour laisser passer au moins un câble 5.

En particulier, la largeur des fentes 8 peut le cas échéant être inférieure à 2 mm voire à 1 mm, mais sera plus généralement comprise entre 2 et 5 mm.

Les évidements 9 peuvent éventuellement présenter une relativement grande largeur mesurée perpendiculairement à la direction X, par exemple supérieure à 2 cm, cette largeur pouvant notamment être comprise entre 5mm et 5 cm, et avantageusement comprise entre 1 et 3 cm.

Par ailleurs, la longueur des évidements 9, mesurée parallèlement à la direction longitudinale X, peut être comprise par exemple entre 2 et 5 centimètres, voire supérieure.

## Revendications

1. Chemin de câble comprenant un profilé (1) ayant au moins une paroi (2) dans laquelle sont ménagées des découpes (8) en forme de U qui délimitent chacune une languette (7),
**caractérisé en ce qu'**au moins une desdites languettes est repliée sur elle-même de façon à dégager un évidement (9) de passage de câble dans la paroi (2) du chemin de câble.

2. Chemin de câble selon la revendication 1, dans lequel le profilé (1) présente une section en U comportant un fond (2) et deux ailes (3).

3. Chemin de câble selon la revendication 2, dans lequel les découpes (8) en forme de U sont ménagées au moins dans le fond (2) du profilé.

4. Chemin de câble selon l'une quelconque des revendications précédentes, dans lequel les découpes (8) en forme de U sont ménagées à intervalles réguliers le long dudit chemin de câble

5. Chemin de câble selon l'une quelconque des revendications précédentes, dans lequel la languette (7), qui est repliée sur elle-même pour dégager un évidement (9) de passage de câble, est repliée vers l'extérieur du chemin de câble.

6. Chemin de câble selon l'une quelconque des revendications précédentes, dans lequel la languette (8) qui est repliée sur elle-même pour dégager un évidement (9) de passage de câble, est repliée sensiblement à 180 degrés.

7. Chemin de câble selon l'une quelconque des revendications précédentes, supportant au moins un câble (5) qui traverse ledit évidement (9) de passage de câble.

8. Chemin de câble selon l'une quelconque des revendications précédentes, dans lequel l'évidement de passage de câble présente une largeur au moins égale à 1 cm et une longueur au moins égale à 2 cm.

9. Chemin de câble selon l'une quelconque des revendications précédentes, dans lequel le profilé est métallique.

## Patentansprüche

1. Kabelrinne mit einem Profil (1) mit mindestens einer Wandung (2), in welcher U-förmige Ausschnitte (8) gebildet sind, die jeweils eine Lasche (7) abgrenzen, **dadurch gekennzeichnet, dass** mindestens eine der genannten Laschen derart auf sich selbst umgeschlagen ist, dass eine Aussparung (9) zur Durchführung eines Kabels in der Wandung (2) der Kabelrinne freigelegt wird.

2. Kabelrinne nach Anspruch 1, bei der das Profil (1) einen U-förmigen Querschnitt mit einem Boden (2) und zwei Schenkeln (3) aufweist.

3. Kabelrinne nach Anspruch 2, bei der die U-förmigen Ausschnitte (8) zumindest auf dem Boden (2) des Profils gebildet sind.

4. Kabelrinne nach einem beliebigen der vorangehenden Ansprüche, bei der die U-förmigen Ausschnitte (8) in regelmäßigen Abständen entlang der genannten Kabelrinne angeordnet sind.

5. Kabelrinne nach einem beliebigen der vorangehenden Ansprüche, bei der die Lasche (7), welche zur Freilegung einer Aussparung (9) zur Durchführung eines Kabels auf sich selbst umgeschlagen ist, in Bezug auf die Kabelrinne nach außen hin umgeschlagen ist.

6. Kabelrinne nach einem beliebigen der vorangehenden Ansprüche, bei der die Lasche (7), welche zur Freilegung einer Aussparung (9) zur Durchführung eines Kabels auf sich selbst umgeschlagen ist, um nahezu 180 Grad umgeschlagen ist.

7. Kabelrinne nach einem beliebigen der vorangehenden Ansprüche, welche mindestens ein Kabel (5) trägt, das durch die genannte Aussparung (9) zur Durchführung eines Kabels durchgeführt wird.

8. Kabelrinne nach einem beliebigen der vorangehenden Ansprüche, bei der die Aussparung zur Durchführung eines Kabels eine Breite von mindestens 1 cm und eine Länge von mindestens 2 cm aufweist.

9. Kabelrinne nach einem beliebigen der vorangehenden Ansprüche, bei der das Profil metallisch ist.

## Claims

1. A cable conduit comprising a section (1) having at least one wall (2) in which U-shaped cut-out portions (8) are provided, each bounding a tongue (7), **characterised in that** at least one of said tongues is folded back on itself so as to leave free a cable passage opening (9) in the wall (2) of the cable conduit.

2. A cable conduit as claimed in claim 1, in which the section (1) has a U-shaped cross-section with a base (2) and two wings (3).

3. A cable conduit as claimed in claim 2, in which the U-shaped cut-out portions (8) are provided at least in the base (2) of the section.

4. A cable conduit as claimed in any one of the preceding claims, in which the U-shaped cut-out portions (8) are arranged at regular intervals along said run of cable conduit.

5. A cable conduit as claimed in any one of the preceding claims, in which the tongue (7), which is folded back on itself to leave free a cable passage opening (9), is folded out towards the exterior of the cable conduit.

6. A cable conduit as claimed in any one of the preceding claims, in which the tongue (7), folded back on itself to leave free a cable passage opening (9), is essentially folded back by 180 degrees.

7. A cable conduit as claimed in any one of the preceding claims, supporting at least one cable (5) which is passed through said cable passage opening (9).

8. A cable conduit as claimed in any one of the preceding claims, in which the cable passage opening is of a width at least equal to 1 cm and a length at least equal to 2 cm.

9. A cable conduit as claimed in any one of the preceding claims, in which the section is made from metal.
